(19) Europäisches Patentamt

European Patent Office

Office européen des brevets

(11) **EP 1 215 475 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(51) Int Cl.:
*G01L 5/28* *(2006.01)*     *B60T 17/22* *(2006.01)*
*H02P 3/04* *(2006.01)*

(21) Anmeldenummer: **01126909.9**

(22) Anmeldetag: **13.11.2001**

(54) **Verfahren zum Überprüfen der Bremse eines Elektromotors**

Method of testing a brake of an electromotor

Méthode pour tester le frein d'un moteur électrique

(84) Benannte Vertragsstaaten:
**DE FR GB IT SE**

(30) Priorität: **13.12.2000 DE 10062228**

(43) Veröffentlichungstag der Anmeldung:
**19.06.2002 Patentblatt 2002/25**

(73) Patentinhaber: **KUKA Roboter GmbH**
**86165 Augsburg (DE)**

(72) Erfinder: **Hofmann, Joseph**
**86709 Wolferstadt (DE)**

(74) Vertreter: **Lempert, Jost et al**
**Patentanwälte,**
**Dipl.-Ing. Heiner Lichti,**
**Dipl.-Phys. Dr. rer. nat. Jost Lempert,**
**Dipl.-Ing. Hartmut Lasch,**
**Postfach 41 07 60**
**76207 Karlsruhe (DE)**

(56) Entgegenhaltungen:
**DE-A- 3 827 509**     **DE-A- 19 719 990**
**US-A- 5 343 134**

**Beschreibung**

Die Erfindung betrifft ein Verfahren zum Überprüfen der Bremse eines Elektromotors.

Bremsen, die bei Servoantrieben, wie bei drehzahlgeregelten Motorantrieben eines Roboters, eingesetzt werden, haben eine Sicherheitsfunktion im Rahmen der Bremsunterstützung bei Notbremsungen, Festbremsung von Maschinenachsen im antriebslosen bzw. stromlosen Zustand, gegebenenfalls gegen die Gravitationskraft etc. Die Funktiontüchtigkeit der Bremsen muss daher immer sichergestellt sein. Da solche Bremsen, insbesondere bei zeitweiliger dynamischer Beanspruchung, wie bei einer Bremsunterstützung bei Notbremsungen, Verschleiß unterliegen, ist eine Überwachung ihrer Eigenschaften erforderlich. Aus Sicherheitsgründen werden vorwiegend elektromagnetische Bremsen mit Federvorspannung eingesetzt, bei denen die Bremswirkung durch Kompensation eines Permanent-Magnetfeldes bei Anlegen einer Steuerspannung aufgehoben wird. Die Erfindung ist hierauf aber nicht eingeschränkt.

Die EP 924 583 A2 sieht ein Verfahren und eine Anordnung zur Überprüfung von Motorbremsen vor, bei dem bei stillstehendem Motor die Bremse aktiviert wird, kurzzeitig eine Anlaufspannung eingeschaltet wird und anschließend der Motorstrom mit einem vorgegebenen Sollwert verglichen wird, wodurch bei unerwünschten Abweichungen eine Fehlfunktion der Bremse erkannt und entsprechende Maßnahmen zur Herstellung eines sicheren Betriebszustandes des Elektromotors durchgeführt werden. Der Vergleichssollwert muss jeweils so gewählt werden, dass auch bei der relativen großen Streubreite eines Bremsmoments in jedem Falle eine sichere Abschaltung erfolgt. Bei dem beschriebenen Vorgehen kann eine Überwachung der Veränderung des Zustandes der Bremse unter Berücksichtigung der großen Streubreite bei unterschiedlichen Bremsen nicht durchgeführt werden, insbesondere auch nicht hinsichtlich der Einflüsse von Temperatur und Verschmutzung, Abrieb und anderen Alterungseffekten so wie eines vorzeitigen Verschleißes durch dynamische Bremsvorgänge.

Die US 5,343,134 zeigt ein Verfahren zum Prüfen eines Last haltenden Bremsmoments, wobei die Motorgeschwindigkeit auf Null reduziert wird, die Bremse einfällt, an dem Motor eine die Last haltende elektrische Leistung angelegt wird, der zum Motor fließende Strom geändert wird und die Motordrehung durch Pulszählung überprüft wird. Die Motorleistung wird beibehalten, wenn die Zahl der gezählten Pulse geringer ist als eine vorbestimmte Zahl oder sie wird erhöht, wenn die Zahl der gezählten Pulse größer ist als die vorbestimmte Zahl, was letzteres anzeigt, dass die Bremse nicht im Stande ist die Last zu halten.

Der Erfindung liegt daher die Aufgabe zugrunde, ein Verfahren zur Überwachung der Veränderung der Eigenschaften einer Bremse vorzuschlagen, das während des Betriebs des Motors, wie beispielsweise bei einem Roboter, durchgeführt werden kann.

Erfindungsgemäß wird die genannte Aufgabe mit einem Verfahren der eingangs genannten Art gelöst, welches die Merkmale des Anspruchs 1 aufweist.

Während beim Stand der Technik der Motor zur Überprüfung der Bremse stillgesetzt und dann der Überprüfungsvorgang eingeleitet wird, sieht die Erfindung eine Überprüfung der Funktion der Bremse und damit der Änderung ihres Verhaltens im drehzahlgeregelten Betrieb vor, indem in diesem die Bremse für kurze Zeit und gegebenenfalls mehrmals, zum Einfallen gebracht und aufgrund der gewonnenen Messdaten das Bremsmoment der Bremse bestimmt wird, wobei das Messergebnis dann bei späteren Überprüfungen zum Vergleich herangezogen werden kann.

Das Bremsmoment wird aufgrund der unterschiedlichen Motormomente bei eingefallener und gelüfteter Bremse bestimmt. Dabei kann gemäß einer bevorzugten Ausgestaltung vorgesehen sein, dass das Motormoment mittels der Messung des Motorstromes bestimmt wird, wobei insbesondere das Bremsmoment $M_{Br}$ bestimmt wird durch $I_2 * K_{T2} - I_1 * K_{T1}$, wobei $I_1$, $I_2$ Motorströme bei offener bzw. eingefallener Bremse und $K_{T1}$, $K_{T2}$ die zugehörigen Momentenkonstanten des Motors beim Strom $I_1$ bzw. $I_2$ sind.

Eine weitere bevorzugte Ausgestaltung der Erfindung sieht vor, dass die Bremse für weniger als eine Sekunde, insbesondere als solcher quantitativ, d.h. seiner Größe nach lediglich über wenige Zehntel Sekunden einfällt. Dabei kann weiterhin vorgesehen sein, dass in einer Messsequenz der Bremseinfall wiederholt wird und dass eine Umkehr der Drehrichtung des Motors zwischen Bremseinfällen oder nach Gruppen von Bremseinfällen bei gleicher Drehrichtung vorgenommen wird. Auch kann in dem Spezialfall, in dem ein Gravitationsmoment vorhanden ist, wie beispielsweise bei Bewegungen um die A2- oder A3-Achse eines Roboters vorgesehen sein, dass die Messung bei einer Bewegung des Roboters durchgeführt wird, die durch ein gegebenenfalls vorhandenes Gravitationsmoment unterstützt wird.

Zur Berücksichtigung der Motor- bzw. Bremsentemperatur $T_{Br}$, wobei die Motortemperatur als repräsentativ für die Bremsentemperatur angesehen wird, kann vorgesehen sein, dass diese mitgemessen und zur Korrektur des ermittelten Bremsmomentes herangezogen wird.

Weitere Ausgestaltungen des erfindungsgemäßen Verfahrens sehen vor, dass die Messdaten aufgezeichnet werden, wobei darüber hinaus die Daten angezeigt oder ausgedruckt werden können. In Weiterbildung kann vorgesehen sein, dass die Messdaten verschiedener Messsequenzen automatisch verglichen werden.

Weitere Vorteile und Merkmale ergeben sich aus dem Ausführungsbeispiel der Erfindung, das unter Bezugnahme auf die Zeichnung im einzelnen erläutert ist. Dabei zeigt bzw. zeigen:

Fig. 1a-c Diagramme zur Bremsenansteuerung (Fig. 1a), zum Motorstrom (Fig. 1b) und zum Drehzahlverhalten (Fig. 1c) des Motors;

Fig. 2 ein Ablaufdiagramm einer Ausführungsform des erfindungsgemäßen Verfahren;

Fig. 3 ein Prinzipschaltbild für eine bevorzugte Ausgestaltung einer Einrichtung zur Durchführung des erfindungsgemäßen Verfahrens.

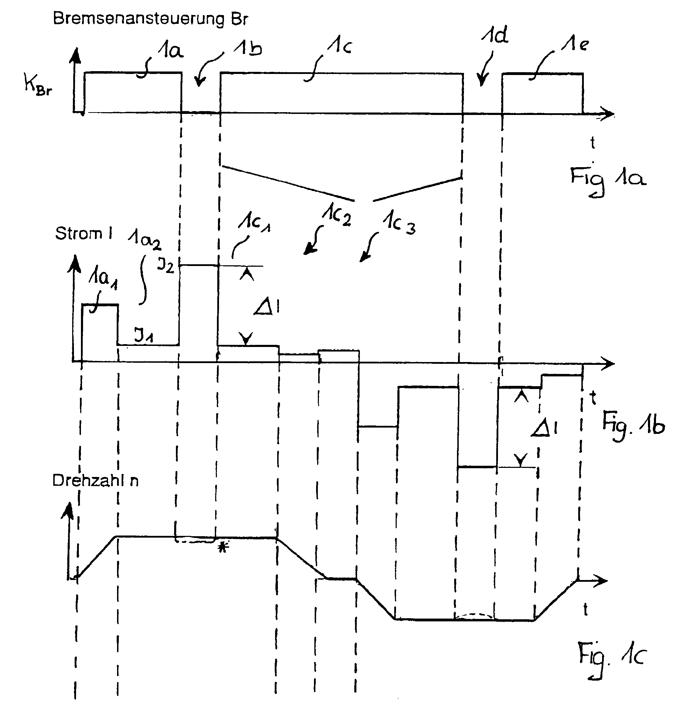

Die Fig. 1a stellt die Bremsenansteuerung im Rahmen der Durchführung des erfindungsgemäßen Verfahrens zum Prüfen der Bremse eines Elektromotors dar. Auf der Abszisse ist (wie auch bei den Fig. 1b und 1c) die Zeit aufgetragen während in der Fig. 1a auf der Ordinate die Bremsenlösespannung $U_{br}$ aufgetragen ist. Bei maximaler Bremsenlösespannung wird das Feld eines Permanentmagneten kompensiert und die Bremse durch Federkraft geöffnet, während bei Bremsenlösespannung 0 die Bremse eingefallen, geschlossen ist und damit einen Bremsmoment ausübt. In den Zeitabschnitten 1a, 1c, 1e ist die Bremse damit geöffnet und in den Zeitabschnitten 1b und 1d geschlossen.

Die Fig. 1b zeigt den Stromverlauf des Motors über eine komplette Bewegungssequenz. Zunächst wird der Motor mit einem relativ großen Strom im Zeitintervall $1a_1$ auf seine Soll-Drehzahl (Fig. 1c) hochgefahren, was sich in der Fig. 1c in einem Anstieg der Drehzahl wiederspiegelt. Nach Erreichen der gewünschten Drehzahl wird diese im Zeitintervall $1a_2$ mit einem geringeren Motorstrom aufrecht erhalten. Im Zeitintervall 1b, in dem die Bremse eingefallen ist, steigt der Strom I aufgrund der Drehzahlregelung zur Aufrechterhaltung der gewünschten Solldrehzahl stark an. Die Drehzahl bricht in diesem Bereich leicht ein, was im Diagramm selbst nicht dargestellt ist, aber durch die Regelung sogleich wieder auf den Sollwert geregelt wird. Nach erneutem Lösen der Bremse fällt der Strom zur Aufrechterhaltung der Drehzahl im Zeitintervall $1c_1$ wieder auf seinen ursprünglichen Wert (Intervall $1a_2$). Im Intervall $1c_2$ erfolgt ein Herunterfahren des Motors bis zum Stillstand (Abfall der Drehzahl N in der Fig. 1c bis auf Null). In der weiteren Hälfte der Diagramme der Figuren 1b bis 1c erfolgt der gleiche Ablauf bei umgekehrter Drehrichtung.

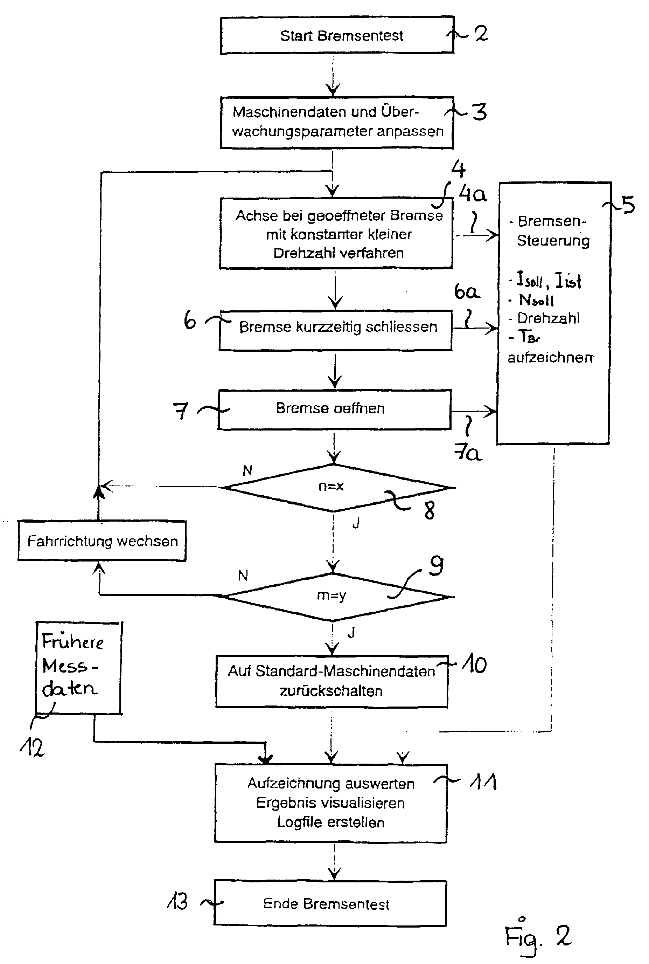

Zur Durchführung des erfindungsgemäßen Verfahrens erfolgt bei laufendem Antrieb ein Starten 2 des Bremsentests (Fig. 2). Hierzu erfolgt zunächst eine Anpassung 3 der Maschinendaten des Roboters und insbesondere der Steuerung des Motors sowie der Überwachungsparameter des Roboters. Dies beinhaltet, dass die Überwachung Abweichungen aufgrund der Messung, wie bei leichtem Einbruch der Drehzahl durch das Bremsen, ohne Fehlermeldung und Abschaltung toleriert. Bei Fahren 4 der entsprechenden Achse, vorzugsweise mit konstanter kleiner Drehzahl, werden die wesentlichen Parameter, wie Fahrstrom, Drehzahl, Temperatur, den Bremsensteuerungszustand im Intervall $1a_2$ (Fig. 1b, 1c) aufgezeichnet 4a. Anschließend erfolgt ein kurzzeitiges Schließen 6 der Bremse über wenige Zehntel Sekunden (Intervall 1b der Fig. 1a), währenddessen wiederum eine Aufzeichnung 6a der entsprechenden Parameter erfolgt. Im weiteren Ablauf erfolgt wiederum ein Öffnen 7 der Bremse und ein erneutes Messen 7a und Aufzeichnen der genannten Parameter.

Im Rahmen einer Messsequenz kann eine mehrfache Wiederholung 8 dieses Ablaufs bis zu einer vorgegebenen Anzahl x erfolgen. Darüber hinaus kann entweder nach jeder vorstehend geschilderten Sequenz oder aber nach einer vorgegebenen Anzahl x eine Umkehrung 9 der Drehrichtung des Motors und die Durchführung der Mess- und Testsequenz in umgekehrter Drehrichtung erfolgen.

Nach Durchführung der gewünschten Anzahl der Messsequenzen erfolgt ein Zurückschalten 10 auf die Betriebs-Maschinendaten. Anschließend erfolgt eine Auswertung 11 der Aufzeichnung, gegebenenfalls unter Heranziehung früherer Messdaten 12 sowie die Abspeicherung des gewonnenen Ergebnisses. Schließlich erfolgt die Beendigung 13 des Bremsentests.

Das für den Zustand der Bremse charakteristische Bremsmoment wird dabei aus der Differenz zwischen dem Motormoment bei eingefallener und bei offener Bremse und damit gemäß

$$M_{Br} = I_2 * K_{T2} - I_1 * K_{T1}$$

berechnet, wobei $I_1$, $I_2$ die Motorströme bei offener bzw. eingefallener Bremse, $K_{T1}$, $K_{T2}$ die Momentenkonstanten des Motors beim Strom $I_1$ bzw. $I_2$ sind.

Die Momentenkonstante des Motors (definiert durch Motormoment/Motorstrom) kann in erster Näherung als konstant angenommen werden, womit sich die obige Beziehung vereinfacht zu $M_{Br} = \Delta I * K_T$, wobei $\Delta I = I_2 - I_1$; die Momentenkonstante des Motors ist im Datenblatt des Motorherstellers angegeben. Für genauere Ergebnisse ist, wie mit der erstgenannten Formel angedeutet, die Abhängigkeit der Momentenkonstante von Motorstrom, Drehzahl und Motortemperatur zu berücksichtigen, so dass diese gegebenenfalls zu messen und aufzuzeichnen ist und in der o.g. Formel (1) unter Berücksichtigung von temperaturabhängigen Faktoren in einer softwaremäßig abgelegten Momentenkonstantentabelle des Herstellers mit korrigierten Momentenkonstanten das Bremsmoment zu bestimmen ist.

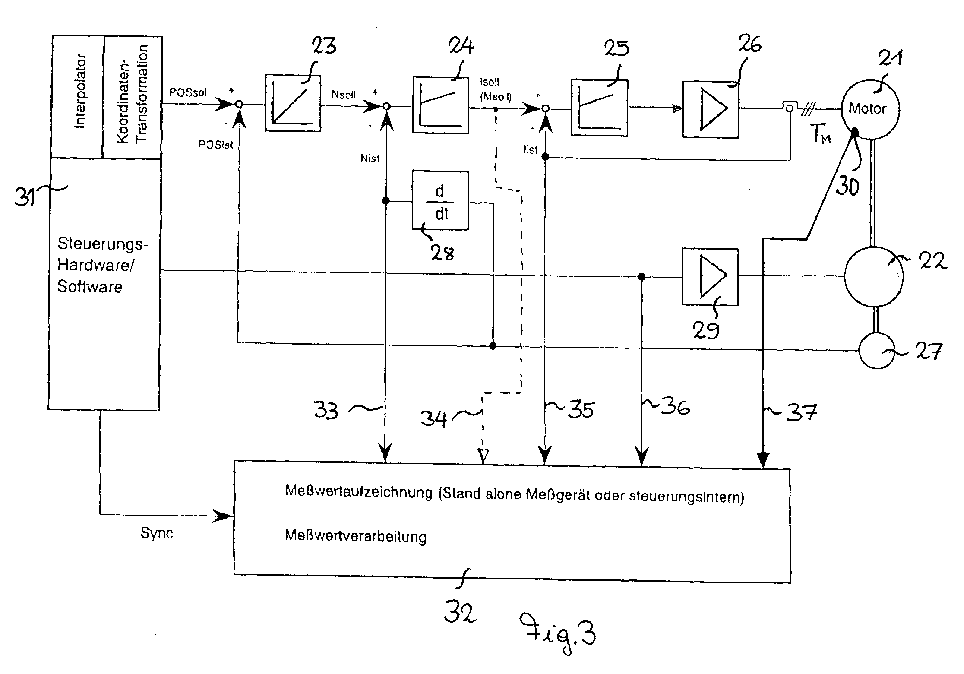

Die Fig. 3 zeigt eine Kaskadenregelung zur Drehzahlregelung eines Motors 21 mit einer Motorbremse 22. Die Regelung beinhaltet einen Positionsregler 23, einen Drehzahlregler 24, einen Stromregler 25 und einen Leistungsverstärker 26 sowie einen Positionsgeber 27 und ein zwischen diesem und dem Drehzahlregler angeordnetes Differenzierglied 28 zur Bestimmung der Ist-Drehzahl N aus der zeitlichen Veränderung der durch den Positionsgeber 27 gemessenen Positionen. Der Bremse 22 ist eine Schalt- oder Steuerstufe 29 vorgeordnet. Die Motortemperatur wird über einen Temperatursensor 30 gemessen. Die Steuerung erfolgt über eine Steuereinheit 31, wie insbesondere einen Steuerrechner. Die Messung und Auswertung der Messergebnisse erfolgt über eine Aufzeichnungseinheit 32.

Die Drehzahlregelung des Motors 21 erfolgt durch die Kaskadenregelung in üblicher Weise, wobei durch den Positionsregler 23 eine Soll-Drehzahl $N_{Soll}$ vorgegeben, diese im Drehzahlregler 24 mit der über den Positionsgeber 27 und das Differenzierglied 28 gewonnenen Ist-Drehzahl $N_{Ist}$ verglichen und bei Abweichung ein Soll-Stromwert $I_{Soll}$ (der dem Soll-Drehmoment $M_{Soll}$ entspricht) vorgegeben wird. Dieser wird mit dem Ist-Stromwert $I_{Ist}$ verglichen und bewirkt bei einer Abweichung ein Stellsignal für den Leistungsverstärker 26, der den Motor mit der erforderlichen Spannung beaufschlagt. Zur Durchführung des Bremsentests wird die die Bremse 22 lüftende Lösespannung $U_{Br}$ von der Steuereinheit 31 über die Schaltstufe 29 reduziert bzw. abgeschaltet, wobei die Bremse einfällt; diese reduziert damit die Motordrehzahl, was über den Positionsgeber 27 bzw. den Drehzahlregler 24 festgestellt wird, so dass im Rahmen der Drehzahlregelung die in Fig. 1a bis 1c dargestellte Stromerhöhung zur Aufrechterhaltung der Soll-Drehzahl $N_{Soll}$ erfolgt.

Zur Messung des Bremsenzustandes werden durch die Aufzeichnung mit der Messeinheit 32 vorzugsweise die folgenden Werte erfasst: Ist-Drehzahl $N_{Ist}$ 33, Soll-Strom $I_{Soll}$ 34 und/oder Ist-Strom $I_{Ist}$ 35, Bremsensteuersignal 36 sowie Motortemperatur 37. Aus diesen Werten wird dann in der oben beschriebenen Weise der Bremsenzustand bestimmt und mit früheren Daten verglichen. Die Ergebnisse werden abgespeichert, angezeigt und/oder ausgedruckt.


**Patentansprüche**

1. Verfahren zum Überprüfen der Bremse (22) eines Elektromotors (21), **dadurch gekennzeichnet, dass** in einem drehzahlgeregelten Betrieb, in dem eine gewünschte Solldrehzahl des Elektromotors (21) aufrecht erhalten werden soll, die Bremse (22) des Elektromotors (21) für kurze Zeit zum Einfallen gebracht wird, und mindestens während dieser Zeit ein Motorstrom ($I_{SOLL}$, $I_{IST}$) des Elektromotors (21) in einer Mess-Sequenz gemessen und aufgrund der so gewonnenen Messdaten das Bremsmoment ($M_{BR}$) der Bremse (22) des Elektromotors (21) bestimmt wird.

2. Verfahren nach Anspruch 1, **dadurch gekennzeichnet, dass** das Bremsmoment ($M_{Br}$) aufgrund der Motorströme ($I_1$, $I_2$) bei gelöster und bei eingefallener Bremse (22) bestimmt wird.

3. Verfahren nach Ansprüchen 1 oder 2, **dadurch gekennzeichnet, dass** die Bremse (22) für die Zeit mindestens einer Motorumdrehung einfällt.

4. Verfahren nach einem der Ansprüche 1 bis 3, **dadurch gekennzeichnet, dass** in einer Messsequenz der Bremseneinfall wiederholt wird.

5. Verfahren nach einem der Ansprüche 1 bis 4, **dadurch gekennzeichnet, dass** eine Umkehr der Drehrichtung des Motors (21) zwischen Bremseneinfällen oder nach Gruppen von Bremseneinfällen bei gleicher Drehrichtung vorgenommen wird.

6. Verfahren nach einem der vorangehenden Ansprüche, **dadurch gekennzeichnet, dass** die Messung bei einer Bewegung des Motors (21) durchgeführt wird, die durch ein gegebenenfalls vorhandenes Gravitationsmoment unterstützt wird.

7. Verfahren nach einem der vorangehenden Ansprüche, **dadurch gekennzeichnet, dass** die Motor- und/oder Bremsentemperatur ($T_{Br}$) gemessen und zur Korrektur des ermittelten Bremsmoments ($M_{Br}$) herangezogen wird.

8. Verfahren nach einem der vorangehenden Ansprüche, **dadurch gekennzeichnet, dass** die Messdaten ($N_{ist}$, $I_{soll}$, $I_{ist}$, $T_{Br}/U_{br}$; $M_{Br}$) aufgezeichnet werden.

9. Verfahren nach einem der vorangehenden Ansprüche, **dadurch gekennzeichnet, dass** die Messdaten ($N_{ist}$, $I_{soll}$, $I_{ist}$, $T_{Br}/U_{br}$; $M_{Br}$) angezeigt werden.

10. Verfahren nach einem der vorangehenden Ansprüche, **dadurch gekennzeichnet, dass** die Messdaten ($N_{ist}$, $I_{soll}$, $I_{ist}$, $T_{Br}$; $M_{Br}$) ausgedruckt werden.

11. Verfahren nach einem der vorangehenden Ansprüche, **dadurch gekennzeichnet, dass** die Messdaten ($N_{ist}$, $I_{soll}$, $I_{ist}$, $T_{Br}$; $M_{Br}$) verschiedener Messsequenzen automatisch verglichen werden.


**Claims**

1. Method for testing the brake (22) of an electric motor (21), **characterized in that** in speed-regulated operation in which a desired speed of the electric motor (21) is to be maintained, the brake (22) of electric motor (21) is applied for a short time and at least during this time a motor current (Ides, Iact) of the electric motor (21) is measured in a measuring sequence and on the basis of the thus obtained measurement data the braking moment (MBR) of brake (22) of electric motor (21) is determined.

**2.** Method according to claim 1, **characterized in that** the braking moment ($M_{BR}$) is determined on the basis of the motor currents ($I_1$, $I_2$) with the brake (22) released and applied.

**3.** Method according to claims 1 or 2, **characterized in that** the brake (22) is applied for the time of at least one motor revolution.

**4.** Method according to one of the claims 1 to 3, **characterized in that** brake application is repeated in a measuring sequence.

**5.** Method according to one of the claims 1 to 4, **characterized in that** a reversal of the rotation direction of motor (21) is carried out between brake applications or following groups of brake applications with the same rotation direction.

**6.** Method according to one of the preceding claims, **characterized in that** the measurement is performed during a movement of motor (21) assisted by a possibly present gravitational moment.

**7.** Method according to one of the preceding claims, **characterized in that** the motor and/or brake temperature ($T_{BR}$) is measured and used for correcting the determined braking moment ($M_{BR}$).

**8.** Method according to one of the preceding claims, **characterized in that** the measurement data ($N_{act}$, $I_{des}$, $I_{act}$, $T_{Br}/U_{br}$; $M_{Br}$) are recorded.

**9.** Method according to one of the preceding claims, **characterized in that** the measurement data ($N_{act}$, $I_{des}$, $I_{act}$, $T_{Br}/U_{br}$; $M_{Br}$) are displayed.

**10.** Method according to one of the preceding claims, **characterized in that** the measurement data ($N_{act}$, $I_{des}$, $I_{act}$, $T_{Br}$; $M_{Br}$) are printed out.

**11.** Method according to one of the preceding claims, **characterized in that** the measurement data ($N_{act}$, $I_{des}$, $I_{act}$, $T_{Br}$; $M_{Br}$) of different measuring sequences are automatically compared.

**Revendications**

**1.** Procédé pour surveiller l'état d'un frein (22) d'un moteur électrique (21), **caractérisé en ce que** dans un mode de fonctionnement régulé en régime, dans lequel une vitesse de rotation théorique souhaitée du moteur électrique (21) doit être maintenue, on active pendant une courte durée le frein (22) du moteur électrique (21), et durant cette période au moins, on mesure un courant ($I_{soll}$, $I_{ist}$) du moteur électrique (21) et on détermine le moment de freinage ($M_{Br}$) du frein (22) du moteur électrique (21) sur la base des données de mesure ainsi obtenues.

**2.** Procédé selon la revendication 1, **caractérisé en ce que** le moment de freinage ($M_{Br}$) est déterminé lorsque le frein (22) est désactivé et lorsqu'il est activé sur la base des courants du moteur ($I_1$, $I_2$).

**3.** Procédé selon les revendications 1 ou 2, **caractérisé en ce que** le frein (22) est activé au moins pendant la durée d'une rotation de moteur.

**4.** Procédé selon l'une quelconque des revendications 1 à 3, **caractérisé en ce que** durant une séquence de mesure, l'activation du frein est répétée.

**5.** Procédé selon l'une quelconque des revendications 1 à 4, **caractérisé en ce que** l'on inverse la direction de rotation du moteur (21) entre des activations du frein ou après des séries d'activation pour une même direction de rotation.

**6.** Procédé selon l'une quelconque des revendications précédentes, **caractérisé en ce que** la mesure est effectuée lors d'un mouvement du moteur (21) soutenu par un éventuel moment gravitationnel.

**7.** Procédé selon l'une quelconque des revendications précédentes, **caractérisé en ce que** l'on mesure la température du moteur et/ou du frein ($T_{Br}$) et **en ce qu'**on la prend en compte pour la correction du moment de freinage ($M_{Br}$) déterminé.

**8.** Procédé selon l'une quelconque des revendications précédentes, **caractérisé en ce que** les données de mesure ($N_{ist}$, $I_{soll}$, $I_{lit}$, $T_{Br}/U_{br}$ ; $M_{Br}$) sont enregistrées.

**9.** Procédé selon l'une quelconque des revendications précédentes, , **caractérisé en ce que** les données de mesure ($N_{ist}$, $I_{soll}$, $I_{ist}$, $T_{Br}/U_{br}$ ; $M_{Br}$) sont affichées.

**10.** Procédé selon l'une quelconque des revendications précédentes, , **caractérisé en ce que** les données de mesure ($N_{ist}$, $I_{soll}$, $I_{ist}$, $T_{Br}/U_{br}$ ; $M_{Br}$) sont imprimées.

**11.** Procédé selon l'une quelconque des revendications précédentes, **caractérisé en ce que** les données de mesure ($N_{ist}$, $I_{soll}$, $I_{ist}$, $T_{Br}/U_{br}$ ; $M_{Br}$) de différentes séquences de mesure sont automatiquement comparées.

Bremsenansteuerung Br

$1a$   $1b$   $1c$   $1d$   $1e$

$K_{Br}$

Fig $1a$

$1c_1$   $1c_2$   $1c_3$

Strom I   $1a_2$

$1a_1$   $J_2$

$J_1$

$\Delta I$

Fig. $1b$

$\Delta I$

Drehzahl n

Fig. $1c$

```
                    ┌─────────────────────────┐
                    │    Start Bremsentest     │~ 2
                    └─────────────────────────┘
                                 ┆
                                 ▼
                    ┌─────────────────────────┐
                    │ Maschinendaten und Über- │~ 3
                    │ wachungsparameter anpassen│
                    └─────────────────────────┘
                                 ┆                        4
                                 ▼                    ⌠ 4a
                    ┌─────────────────────────┐              ┌──────────────────┐
                    │ Achse bei geoeffneter Bremse│ ─ ─ ─►    │ - Bremsen-       │~ 5
                    │ mit konstanter kleiner   │             │   Steuerung      │
                    │ Drehzahl verfahren       │             │                  │
                    └─────────────────────────┘             │ - Isoll , Iist   │
                                 ▼              6a           │ - Nsoll          │
                    ┌─────────────────────────┐             │ - Drehzahl       │
              6 ~   │ Bremse kurzzeitig schliessen│ ──────►   │ - TBr            │
                    └─────────────────────────┘             │  aufzeichnen     │
                                 ▼                           │                  │
                    ┌─────────────────────────┐             │                  │
              7 ~   │      Bremse oeffnen      │ ──────►     │                  │
                    └─────────────────────────┘             │                  │
                                 ┆            7a             └──────────────────┘
                                 ▼
                         ◇◇◇◇◇◇◇◇◇◇◇
                  N     ◇    n=x     ◇
           ◄─ ─ ─ ─ ─ ─ ◇           ◇~ 8
           │             ◇◇◇◇◇◇◇◇◇◇◇
           │                  │ J
    ┌──────────────┐          ┆                    9
    │ Fahrrichtung │          ▼
    │ wechsen      │       ◇◇◇◇◇◇◇◇◇◇◇
    └──────────────┘   N  ◇    m=y     ◇
           ▲◄─ ─ ─ ─ ─ ─ ◇           ◇
           │             ◇◇◇◇◇◇◇◇◇◇◇
           │                  │ J
  ┌──────────┐               ▼
  │ Frühere  │    ┌─────────────────────────┐
  │ Mess -   │    │ Auf Standard-Maschinendaten│~ 10
  │ daten    │    │ zurückschalten           │
  └──────────┘    └─────────────────────────┘
      ~ 12    │           ┆
              └──────────►│         ▼
                    ┌─────────────────────────┐
                    │ Aufzeichnung auswerten   │~ 11
                    │ Ergebnis visualisieren   │
                    │ Logfile erstellen        │
                    └─────────────────────────┘
                                 ┆
                                 ▼
                    ┌─────────────────────────┐
              13 ~  │     Ende Bremsentest     │
                    └─────────────────────────┘
```

Fig. 2

Fig.3